# EUROPÄISCHE PATENTSCHRIFT

(11) **EP 2 681 375 B1**
(45) Veröffentlichungstag und Bekanntmachung des Hinweises auf die Patenterteilung: **06.01.2016**
(21) Anmeldenummer: 12713036.7
(22) Anmeldetag: 27.03.2012
(51) Int. Cl.: E04B 9/10, F16B 7/04

(54) **VERBINDUNGSELEMENT UND VERFAHREN ZU DESSEN HERSTELLUNG**
CONNECTING ELEMENT AND METHOD OF MANUFACTURING
ÉLÉMENT DE CONNEXION ET PROCEDE DE FABRICATION

(30) Priorität: 29.03.2011 DE 102011015435
(43) Veröffentlichungstag der Anmeldung: 08.01.2014
(73) Patentinhaber: Protektorwerk Florenz Maisch GmbH & Co. KG, 76571 Gaggenau (DE)
(72) Erfinder: HERTWECK, Theo, 76532 Baden-Baden (DE); WAIBEL, Martin, 76571 Gaggenau (DE); LEIER, Andreas, 76571 Gaggenau (DE)
(74) Vertreter: Manitz, Finsterwald & Partner GbR
(86) Internationale Anmeldenummer: PCT/EP2012/055405
(87) Internationale Veröffentlichungsnummer: WO 2012/130840

(56) Entgegenhaltungen:
- DE-A1- 2 109 117
- DE-A1- 4 322 631
- DE-B3- 10 249 783
- DE-U1- 9 401 416
- DE-U1-202007 008 901

## Beschreibung

Die vorliegende Erfindung betrifft ein Verbindungselement zum Verbinden von Profilschienen und/oder Profilen verschiedener Form, mit einem flächigen Basisteil, das einen zentralen Steg und zwei seitliche, in Bezug auf den Steg abgewinkelte Schenkel umfasst.

Aus der DE 102 49 783 B3 sowie der DE 94 01 416 U1 sind jeweils ein Verbindungselement gemäß dem Oberbegriff des Anspruchs 1 der vorliegenden Anmeldung bekannt. Derartige Verbindungselemente dienen beispielsweise dazu, zwei Profilschienen, insbesondere Tragschienen für abgehängte Decken, in Längs- oder Querrichtung miteinander zu verbinden, oder eine Profilschiene mit einer Halterung, beispielsweise einem Wandanschluss, oder einem sonstigen Querprofil zu verbinden. Die Querschnittsform des Verbindungselements kann an eine bestimmte Art von Profilschiene angepasst sein, so dass das Verbindungselement in die Profilschiene einsteckbar und gegebenenfalls in dieser verklemmbar ist. Verbindungselemente der genannten Art können insbesondere einen U-förmigen oder H-förmigen Querschnitt aufweisen, wobei während der Herstellung eine flächige Lage eines Ausgangsmaterials zurechtgebogen wird. Eine flächige Bauweise des Basiselements ermöglicht eine einfache und kostengünstige Fertigung. Eine gängige Bauform eines Verbindungselements der genannten Art sieht vor, dass die zwei Schenkel entlang einer jeweiligen Biegekante relativ zu einem ebenen Steg umgebogen sind.

Die DE 20 2007 008 901 U1 offenbart einen Profilverbinder, der einen Steg und zwei Schenkel umfasst. Die Schenkel sind mit Biegelaschen versehen.

Es besteht das Bedürfnis, bei Verbindungselementen der vorstehend genannten Art den Materialbedarf und das Eigengewicht zu senken.

Dies wird durch ein Verbindungselement mit den Merkmalen des Anspruchs 1 erreicht.

Erfindungsgemäß umfasst wenigstens einer der Schenkel ein unter Bildung eines Freiraums aus dem Steg herausgeklapptes Flächenstück des Basisteils. Mit anderen Worten ist der Schenkel zumindest teilweise durch ein Flächenstück gebildet, das ursprünglich, also auf das Ausgangsmaterial bezogen, zu dem Steg gehört hat und erst durch Herausklappen zu einem Teil eines der Schenkel geworden ist. Auf diese Weise kann der Materialeinsatz verringert werden, da bei dem fertiggestellten Verbindungselement der Steg einen Freiraum aufweist, in dem sich ursprünglich das herausgeklappte Flächenstück befunden hat. Somit können das Gewicht und die Herstellungskosten des Verbindungselements gesenkt werden. Erfindungsgemäß wurde festgestellt, dass die Stabilität des Stegs trotz des Freiraums ausreicht, um ein zuverlässiges Verbinden von Profilschienen zu gewährleisten. Durch das Vorsehen eines herausgeklappten Flächenstücks wird außerdem unerwünschter Ausschuss vermieden, der im Falle eines nachträglichen Herausschneiden eines Flächenstücks aus dem Steg entstehen würde.

Weiterbildungen der Erfindung sind in den abhängigen Ansprüchen, der Beschreibung sowie den beigefügten Zeichnungen angegeben.

Vorzugsweise umfasst jeder der beiden Schenkel ein aus dem Steg herausgeklapptes Flächenstück des Basisteils. Dadurch kann die Materialeinsparung weiter erhöht werden.

Das Flächenstück kann entlang einer nicht bis an den Rand des Basisteils heranreichenden, insbesondere U-förmigen, Trennlinie aus dem Steg herausgeklappt sein. Die Trennlinie definiert also einen Einschnitt im Steg. Der Verlauf der Trennlinie gibt die Form des herausgeklappten Flächenstücks vor. Insbesondere kann jeder der beiden Schenkel ein Flächenstück des Basisteils umfassen, welches entlang einer U-förmigen Trennlinie aus dem Steg herausgeklappt ist. Dabei weisen vorzugsweise die Schenkel der U-förmigen Trennlinien voneinander weg. Die beiden herausgeklappten Flächenstücke des Verbindungselements besitzen somit U-förmige Außenkanten, wohingegen der Steg insgesamt H-förmig ausgebildet ist.

Gemäß einer Ausführungsform der Erfindung ist der Schenkel durch einen umgebogenen Randstreifen des Basisteils und das sich an den umgebogenen Randstreifen anschließende herausgeklappte Flächenstück gebildet. Das herausgeklappte Flächenstück steht über den Randstreifen mit dem Steg in Verbindung. Zum Herausklappen des Flächenstücks wird also beispielsweise der Randstreifen relativ zu dem Steg umgebogen, wobei das beim Umbiegen mit dem Randstreifen mitgeschwenkte Flächenstück relativ zu dem Randstreifen unverändert gelassen werden kann oder zusätzlich umgebogen werden kann.

Der Randstreifen kann insbesondere um ca. 90° gegenüber dem Steg umgebogen sein. Dadurch kann der Randstreifen einen Teil eines abgewinkelten Schenkels bilden und das Verbindungselement kann zum Verbinden gängiger U-förmiger Profilschienen oder beispielsweise von Hohlprofilen dienen. Der Randstreifen kann jedoch auch um einen anderen Winkelbetrag gegenüber dem Steg umgebogen sein, wenn die zu verbindenden Profilschienen einen entsprechenden Knick aufweisen. D.h. das Ausmaß des Umbiegens und deren Ausformung können sich nach den zu verbindenden Profilschienen richten.

Weiterhin können der umgebogene Randstreifen und das herausgeklappte Flächenstück gemeinsam eine glatte, im Wesentlichen ebene Fläche bilden. Dies ermöglicht eine besonders einfache Herstellung, da kein zusätzlicher Arbeitsschritt notwendig ist, um den Randstreifen relativ zu dem herausgeklappten Flächenstück umzubiegen.

Der umgebogene Randstreifen ist vorzugsweise schmäler als das herausgeklappte Flächenstück. Da die Materialeinsparung gegenüber einem herkömmlich geformten Profil im Wesentlichen durch die Größe des herausgeklappten Flächenstücks gegeben ist, ist bei dieser Ausgestaltung eine besonders ausgeprägte Verringerung der Herstellungskosten möglich.

Gemäß einer weiteren Ausführungsform der Erfindung umfasst der Steg einen, bevorzugt zentralen, Längsstreifen und zwei sich stirnseitig an diesen anschließende Querstreifen, wobei die Querstreifen mit den Schenkeln in Verbindung stehen. Zwischen den beiden Querstreifen erstrecken sich beidseits des Längsstreifens entlang einer Längsachse des Verbindungselements jeweilige materialfreie Bereiche, an welchen sich ursprünglich das herausgeklappte Flächenstück befunden hat.

Gemäß einer weiteren Ausführungsform der Erfindung sind die Schenkel gekrümmt, um ein Verklemmen oder Verkrallen des Verbindungselements in der zugehörigen Profilschiene zu erleichtern. Die Krümmung kann dabei bevorzugt, von außen gesehen, konkav von dem Steg zum freien Ende des jeweiligen Schenkels hin verlaufen. Grundsätzlich können die Schenkel auch glatt, d.h. ungekrümmt, verlaufen, um z.B. eine bessere Anpassung an zu verbindende Profilschienen mit ebenfalls ungekrümmt verlaufenden Schenkelbereichen zu erzielen.

Vorzugsweise besteht das Basisteil aus Metall, insbesondere aus Blech, oder aus Kunststoff. Dies ermöglicht eine besonders einfache und kostengünstige Herstellung. Grundsätzlich kann das Basisteil auch aus Kunststoff bestehen.

Das Basisteil, insbesondere der Steg, kann ferner wenigstens eine Verstärkungssicke umfassen. Auf diese Weise kann die Stabilität des Verbindungselements gesteigert werden.

Die Erfindung betrifft ferner ein Verfahren zum Herstellen eines Verbindungselements zum Verbinden von Profilschienen und/oder Profilen verschiedener Form, bei welchem ein flächiges Basisteil bereitgestellt und zu einem Profilelement mit einem zentralen Steg und zwei seitlichen in Bezug auf den Steg abgewinkelten Schenkeln geformt wird.

Erfindungsgemäß wird das Basisteil entlang einer Trennlinie eingeschnitten und ein Flächenstück des Basisteils wird entlang der Trennlinie derart unter Bildung eines Freiraums aus der Ebene des Basisteils herausgeklappt, dass es zumindest einen Teil eines der Schenkel bildet. Das bereitgestellte Basisteil kann insbesondere eine ebene, flächige Lage eines Ausgangsmaterials, wie eine Blechlage, sein. Während gängiger Weise äußere Randabschnitte des Basisteils zu Schenkeln abgewinkelt werden, wofür dann auch im Voraus entsprechende Materialbereiche vorzusehen sind, wird erfindungsgemäß ein Teil der Schenkel aus dem inneren Bereich der Ausgangslage herausgebogen, welcher später den Steg bildet. Ermöglicht wird dies durch den Einschnitt, welcher einerseits eine Entfernung von Ausgangsmaterial aus dem Inneren der Ausgangslage gestattet und andererseits dafür sorgt, dass eine Restverbindung zwischen dem Steg und den Schenkeln aufrechterhalten wird.

Vorzugsweise wird beim Herausklappen des Flächenstücks ein Randstreifen des Basisteils im Bereich von zwei sich an die Trennlinie anschließenden Verbindungsabschnitten umgebogen, insbesondere um ca. 90°. Das Umbiegen erfolgt entlang zweier Biegekanten, welche jeweils von einem Ende der Trennlinie zu einem Rand des Basisteils verlaufen. Aufgrund des zuvor gesetzten Einschnitts wird beim Umbiegen des Randstreifens entlang der beiden - vorzugsweise relativ kurzen - Biegekanten das mittlere Flächenstück automatisch aus der Ebene des Stegs herausgeklappt. Im Vergleich zu einem bekannten Verbindungselement mit seitlich umgebogenen Schenkeln kann erfindungsgemäß die für das Basisteil vorzusehende Lage des Ausgangsmaterials schmäler ausgebildet sein. Im Einzelnen sind nur die Bereiche für die - bevorzugt relativ schmalen - Randstreifen als Zugaben gegenüber der Stegfläche vorzusehen.

Die Schenkel können zusätzlich zu einer Wölbung gebogen werden, um ein Einklemmen oder Einkrallen des Verbindungselements in eine zugehörige Profilschiene zu erleichtern. Das Biegen zu einer Wölbung kann jedoch von der Querschnittsform der zu verbindenden Profilschienen abhängig gemacht werden.

Weiterhin kann zur Erhöhung der Stabilität des Verbindungselements wenigstens eine Verstärkungssicke in das Basisteil, insbesondere in den Steg, hineingeformt werden.

Die Erfindung wird nachfolgend beispielhaft unter Bezugnahme auf die Zeichnungen beschrieben.
- Fig. 1: zeigt ein Basisteil eines erfindungsgemäßen Verbindungselements vor dem Herausklappen von Flächenstücken.
- Fig. 2: ist eine perspektivische Darstellung eines Verbindungselements gemäß einer Ausführungsform der Erfindung.
- Fig. 3: zeigt eine Draufsicht auf das Verbindungselement gemäß Fig. 2.
- Fig. 4: zeigt eine Seitenansicht des Verbindungselements gemäß Fig. 2.
- Fig. 5: veranschaulicht das Längsverbinden von zwei Profilschienen mittels eines Verbindungselements, das gemäß einer Ausführungsform der Erfindung gestaltet ist.
- Fig. 6: veranschaulicht das Verbinden einer Profilschiene mit einer Halterung mittels eines Verbindungselements, das gemäß einer alternativen Ausführungsform der Erfindung gestaltet ist.

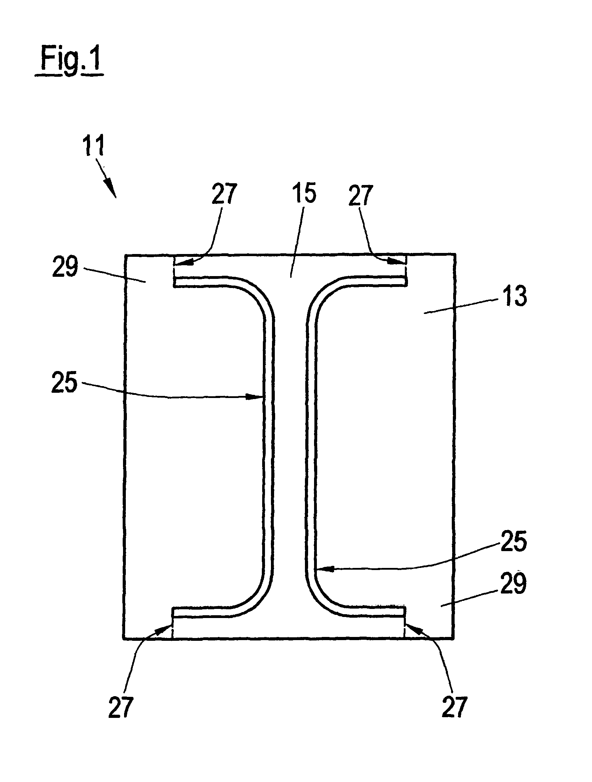

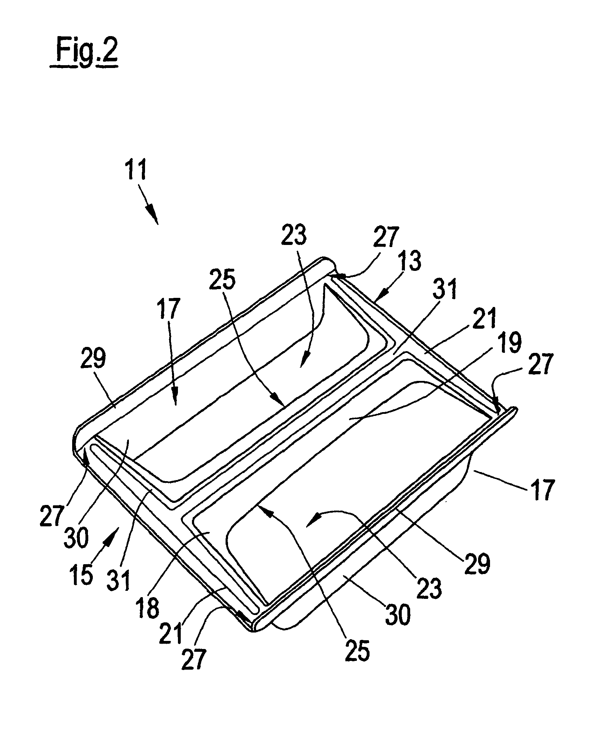

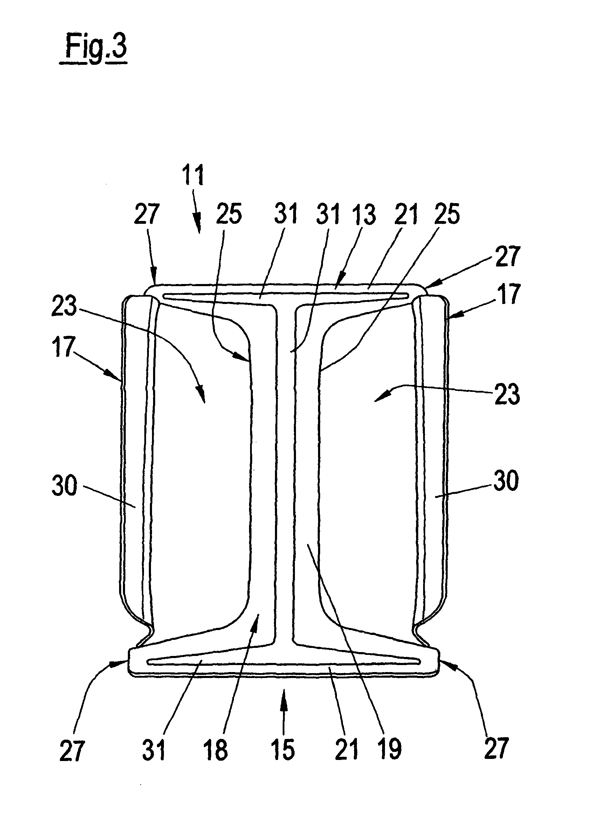

Gemäß Fig. 1 wird ein Verbindungselement 11 zum Längsverbinden von Profilschienen aus einer flächigen Blechlage geformt, welche ein Basisteil 13 des Verbindungselements 11 bildet. Im fertiggestellten Zustand umfasst das Basisteil 13 gemäß Fig. 2 und 3 einen zentralen, im Wesentlichen ebenen Steg 15 und zwei randseitig von diesem abstehende Schenkel 17. Der Steg 15 setzt sich aus einem H-förmigen Stützbereich 18 und zwei materialfreien Bereichen 23 zusammen, wobei der Stützbereich 18 einen Längsstreifen 19 sowie zwei sich stirnseitig daran anschließende Querstreifen 21 umfasst. Der Übergang zwischen dem Stützbereich 18 und den materialfreien Bereichen 23 ist durch zwei U-förmige Trennlinien 25 definiert, welche bei der Herstellung des Verbindungselements 11 durch Einschneiden des Basisteils 13 erzeugt wurden.

Von den Enden jeder Trennlinie 25 erstrecken sich jeweilige Biegekanten 27 bis zum Rand des Basisteils 13. Entlang dieser Biegekanten 27 sind jeweilige Randstreifen 29 des Basisteils 13 um etwa 90° gegenüber der Ebene des Stegs 15 umgebogen. Beim Umbiegen der Randstreifen 29 - in Fig. 2 nach oben - wird aufgrund der vorgesehenen Trennlinien 25 jeweils ein Flächenstück 30 des Basisteils 13 aus dem Steg 15 - in Fig. 1 nach unten - herausgeklappt. Jeder Schenkel 17 ist somit durch einen Randstreifen 29 und ein herausgeklapptes Flächenstück 30 gebildet, wobei sich jeweils der Randstreifen 29 und das herausgeklappte Flächenstück 30 in entgegengesetzte Richtungen von dem Steg 15 weg erstrecken. Der umgebogene Randstreifen 29 und das herausgeklappte Flächenstück 30 bilden dabei jeweils gemeinsam eine glatte, im Wesentlichen ebene Fläche, durch welche der Schenkel 17 definiert ist. An den Biegekanten 27 stehen die Schenkel 17 mit dem Steg 15 in Verbindung, d.h. jeder Randstreifen 29 ist mit Endabschnitten der beiden Querstreifen 21 verbunden. Grundsätzlich könnten auch lediglich die umzuklappenden Flächenstücke gegenüber dem Steg umgebogen werden, während die Randstreifen in ihrer ursprünglichen Lage verbleiben, d.h. nicht umgebogen werden. Die Biegelinien würden sich in diesem Fall jeweils zwischen den freien Enden der U-förmigen Trennlinien erstrecken und diese verbinden.

Beim Herstellen des Verbindungselements 11 wird zunächst eine flächige, ebene Blechlage als Basisteil 13 bereitgestellt, wie dies in Fig. 1 gezeigt ist.

Dieses Basisteil 13 wird entlang der beiden Trennlinien 25 eingeschnitten, sodass sich entsprechende Schlitze bilden. Anschließend werden die beiden Randstreifen 29 entlang der Biegekanten 27 um 90° nach oben gebogen, wobei gleichzeitig die Flächenstücke 30 aus der Ebene des Stegs 15 heraus nach unten geklappt werden, so dass sie gemeinsam mit dem Randstreifen 29 einen abgewinkelten Schenkel 17 des Verbindungselements 11 bilden. Aufgrund der sich daraus ergebenden materialfreien Bereiche 23 des Stegs 15 können Gewicht und Materialkosten eingespart werden.

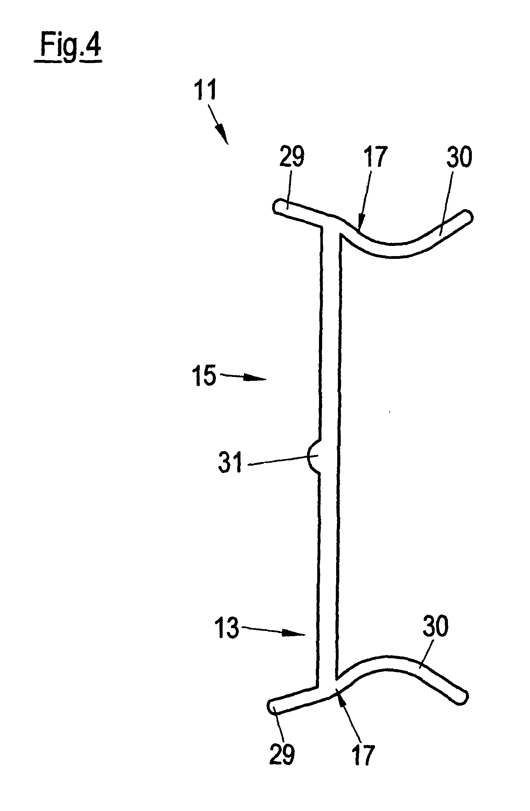

Wie insbesondere aus Fig. 4 hervorgeht, sind die Randstreifen 29 im Vergleich zu den herausgeklappten Flächenstücken 30 relativ schmal ausgebildet, da die erzielbare Materialeinsparung im Wesentlichen durch die Größe der herausgeklappten Flächenstücke 30 gegeben ist. Die Breite des Randstreifens 29 kann hinsichtlich der durch die jeweilige Anwendung gegebenen Stabilitätsanforderungen gewählt sein. Wie ebenfalls aus Fig. 4 hervorgeht, sind die herausgeklappten Flächenstücke 30 nach innen gewölbt, um so die Stabilität weiter zu erhöhen und gegebenenfalls aufgrund der bereitgestellten Federwirkung ein Einkeilen des Verbindungselements 11 in einer zugehörigen Profilschiene zu unterstützen. Zur weiteren Stabilitätserhöhung sind Verstärkungssicken 31 in das Basisteil 13 hineingeformt, welche sich entlang des Längsstreifens 19 sowie der beiden Querstreifen 21 des Stegs 15 erstrecken.

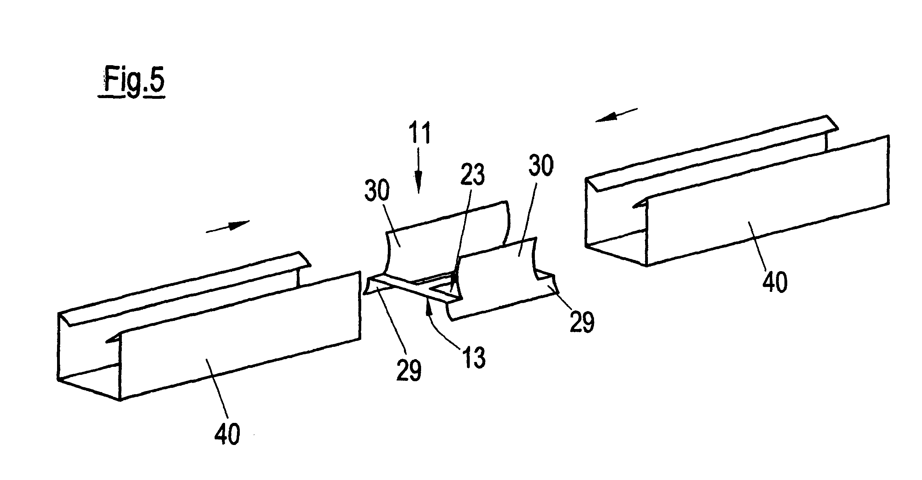

In Fig. 5 ist das Prinzip des Längsverbindens zweier Profilschienen 40 veranschaulicht, wobei die Profilschienen 40 zur Vereinfachung verkürzt dargestellt sind. Ein Verbindungselement 11 wie zuvor beschrieben wird - wie durch die Pfeile verdeutlicht ist - jeweils zur Hälfte in die beiden Profilschienen 40 eingesteckt und verklemmt sich in diesen, sodass die beiden Profilschienen 40 in Längsrichtung fest miteinander verbunden sind.

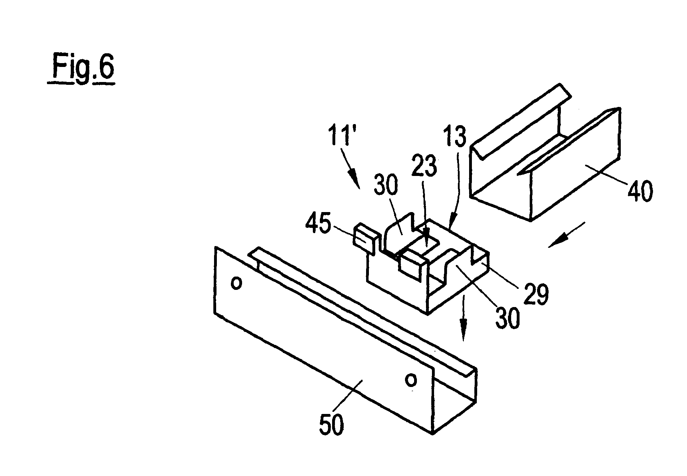

Alternativ kann gemäß Fig. 6 ein Verbindungselement 11' bereitgestellt werden, an dessen einem Ende ein Befestigungsmittel 45 vorgesehen ist. Die herausgeklappten Flächenstücke 30 werden bei dieser Ausführungsform vollständig in eine einzelne Profilschiene 40 eingesteckt, während das Verbindungselement 11' mittels des Befestigungsmittels 45 in Querrichtung an einer Halterung 50 angebracht wird. Die Halterung 50 kann wiederum an einer Wand befestigt werden, sodass das Verbindungselement 11' dem Wandanschluss der Profilschiene 40 dient. Anstelle als Wandanschluss kann die Halterung 50 beispielsweise auch als Querprofil ausgebildet sein.

### Bezugszeichenliste

- 11: Verbindungselement
- 13: Basisteil
- 15: Steg
- 17: Schenkel
- 18: Stützbereich
- 19: Längsstreifen
- 21: Querstreifen
- 23: materialfreier Bereich
- 25: Trennlinie
- 27: Biegekante
- 29: Randstreifen
- 30: herausgeklapptes Flächenstück
- 31: Verstärkungssicke
- 40: Profilschiene
- 45: Befestigungsmittel
- 50: Halterung/Querprofil

## Patentansprüche

1. Verbindungselement (11, 11') zum Verbinden von Profilschienen (40) und/oder Profilen verschiedener Form, mit einem flächigen Basisteil (13), das einen zentralen Steg (15) und zwei seitliche, in Bezug auf den Steg (15) abgewinkelte Schenkel (17) umfasst,
**dadurch gekennzeichnet, dass**
wenigstens einer der Schenkel (17) ein unter Bildung eines Freiraums aus dem Steg (15) herausgeklapptes Flächenstück (30) des Basisteils (13) umfasst.

2. Verbindungselement nach Anspruch 1,
**dadurch gekennzeichnet, dass**
jeder der beiden Schenkel (17) ein aus dem Steg (15) herausgeklapptes Flächenstück (30) des Basisteils (13) umfasst.

3. Verbindungselement nach Anspruch 1 oder 2,
**dadurch gekennzeichnet, dass**
das Flächenstück (30) entlang einer nicht bis an den Rand des Basisteils (13) heranreichenden, insbesondere U-förmigen, Trennlinie (25) aus dem Steg (15) herausgeklappt ist.

4. Verbindungselement nach zumindest einem der vorstehenden Ansprüche,
**dadurch gekennzeichnet, dass**
der Schenkel (17) durch einen umgebogenen Randstreifen (29) des Basisteils (13) und das sich an den umgebogenen Randstreifen (29) anschließende herausgeklappte Flächenstück (30) gebildet ist.

5. Verbindungselement nach Anspruch 4,
**dadurch gekennzeichnet, dass**
der Randstreifen (29) um ca. 90° gegenüber dem Steg (15) umgebogen ist.

6. Verbindungselement nach Anspruch 4 oder 5,
**dadurch gekennzeichnet, dass**
der umgebogene Randstreifen (29) und das herausgeklappte Flächenstück (30) gemeinsam eine glatte, im Wesentlichen ebene Fläche bilden.

7. Verbindungselement nach zumindest einem der Ansprüche 4 bis 6,
**dadurch gekennzeichnet, dass**
der umgebogene Randstreifen (29) schmäler ist als das herausgeklappte Flächenstück (30).

8. Verbindungselement nach zumindest einem der vorstehenden Ansprüche,
**dadurch gekennzeichnet, dass**
der Steg (15) einen, bevorzugt zentralen, Längsstreifen (19) und zwei sich stirnseitig an diesen anschließende Querstreifen (21) umfasst, wobei die Querstreifen (21) mit den Schenkeln (17) in Verbindung stehen.

9. Verbindungselement nach zumindest einem der vorstehenden Ansprüche,
**dadurch gekennzeichnet, dass**
die Schenkel (17) gekrümmt sind.

10. Verbindungselement nach zumindest einem der vorstehenden Ansprüche,
**dadurch gekennzeichnet, dass**
das Basisteil (13) aus Metall, insbesondere aus Blech oder aus Kunststoff, besteht.

11. Verbindungselement nach zumindest einem der vorstehenden Ansprüche,
**dadurch gekennzeichnet, dass**
das Basisteil (13), insbesondere der Steg (15), wenigstens eine Verstärkungssicke (31) umfasst.

12. Verfahren zum Herstellen eines Verbindungselements (11, 11') zum Verbinden von Profilschienen (40) und/oder Profilen verschiedener Form, mit den Schritten:
Bereitstellen eines flächigen Basisteils (13); und
Formen des Basisteils (13) zu einem Profilelement mit einem zentralen Steg (15) und zwei seitlichen, in Bezug auf den Steg (15) abgewinkelten Schenkeln (17),
**dadurch gekennzeichnet, dass**
das Basisteil (13) entlang einer Trennlinie (25) eingeschnitten wird und dass
ein Flächenstück (30) des Basisteils (13) entlang der Trennlinie (25) derart unter Bildung eines Freiraums aus der Ebene des Basisteils (13) herausgeklappt wird, dass es zumindest einen Teil eines der Schenkel (17) bildet.

13. Verfahren nach Anspruch 12,
**dadurch gekennzeichnet, dass**
beim Herausklappen des Flächenstücks (30) ein Randstreifen (29) des Basisteils (13) im Bereich von zwei sich an die Trennlinie (25) anschließenden Verbindungsabschnitten umgebogen wird, insbesondere um ca. 90°.

14. Verfahren nach Anspruch 12 oder 13,
**dadurch gekennzeichnet, dass**
der Schenkel (17) zu einer Wölbung gebogen wird.

15. Verfahren nach zumindest einem der Ansprüche 12 bis 14,
**dadurch gekennzeichnet, dass**
wenigstens eine Verstärkungssicke (31) in das Basisteil (13), insbesondere in den Steg (15), hineingeformt wird.

## Claims

1. A connection element (11, 11') for connecting section rails (40) and/or sections of different shapes, having a planar base part (13) which comprises a central web (15) and two lateral limbs (17) angled with respect to the web (15),
**characterized in that**
at least one of the limbs (17) comprises an areal piece (30) of the base part (13) folded out of the web (15) while forming a free space.

2. A connection element in accordance with claim 1,
**characterized in that**
each of the two limbs (17) comprises an areal piece (30) of the base part (13) folded out of the web (15).

3. A connection element in accordance with claim 1 or claim 2,
**characterized in that**
the areal piece (30) is folded out of the web (15) along a separation line (25), in partiuclar a U-shaped separation line, not extending up to the margin of the base part (13).

4. A connection element in accordance with at least one of the preceding claims,
**characterized in that**
the limb (17) is formed by a bent over marginal strip (29) of the base part (13) and by the folded-out areal piece (30) adjoining the bent over marginal strip (29).

5. A connection element in accordance with claim 4,
**characterized in that**
the marginal strip (29) is bent over by approximately 90° with respect to the web (15).

6. A connection element in accordance with claim 4 or claim 5,
**characterized in that**
the bent over marginal strip (29) and the folded-out areal piece (30) together form a smooth, substantially planar surface.

7. A connection element in accordance with at least one of the claims 4 to 6,
**characterized in that**
the bent over marginal strip (29) is narrower than the folded-out areal piece (30).

8. A connection element in accordance with at least one of the preceding claims,
**characterized in that**
the web (15) comprises a longitudinal strip (19), preferably a central longitudinal strip, and two transverse strips (21) adjoining thereat at the end face, with the transverse strips (21) being connected to the limbs (17).

9. A connection element in accordance with at least one of the preceding claims,
**characterized in that**
the limbs (17) are curved.

10. A connection element in accordance with at least one of the preceding claims,
**characterized in that**
the base part (13) comprises metal, in particular sheet metal or plastic.

11. A connection element in accordance with at least one of the preceding claims,
**characterized in that**
the base part (13), in particular the web (15), comprises at least one reinforcement bead (31).

12. A method of manufacturing a connection element (11, 11') for connecting section rails (40) and/or sections of different shapes, comprising the steps:
providing a planar base part (13); and
shaping the base part (13) to form a section element having a central web (15) and two lateral limbs (17) angled with respect to the web (15),
**characterized in that**
an incision is made into the base part (13) along a separation line (25); and **in that**
an areal piece (30) of the base part (13) is folded out of the plane of the base part (13) along the separation line (25) while forming a free space such that it forms at least a part of one of the limbs (17).

13. A method in accordance with claim 12,
**characterized in that**
a marginal strip (29) of the base part (13) is bent over, in particular by approximately 90°, in the region of two connection portions adjoining the separation line (25) on the folding out of the areal piece (30).

14. A method in accordance with claim 12 or claim 13,
**characterized in that**
the limb (17) is bent to form an arch.

15. A method in accordance with at least one of the claims 12 to 14,
**characterized in that**
at least one reinforcement bead (31) is shaped into the base part (13), in particular into the web (15).

## Revendications

1. Élément de liaison (11, 11') pour la liaison de tringles profilées (40) et/ou de profilés de différentes formes, comprenant une partie de base surfacique (13) qui inclut une barrette centrale (15) est deux ailes latérales (17), en angle par rapport à la barrette (15),
**caractérisé en ce que**
l'une au moins des ailes (17) inclut un morceau surfacique (30) de la partie de base (13) rabattu à partir de la barrette (15) en formant un espace libre.

2. Élément de liaison selon la revendication 1,
**caractérisé en ce que** chacune des deux branches (17) inclut un morceau surfacique (30) de la partie de base (13) rabattu à partir de la barrette (15).

3. Élément de liaison selon la revendication 1 ou 2,
**caractérisé en ce que** le morceau surfacique (30) est rabattu à partir de la barrette (15) le long d'une ligne de séparation (25) qui ne s'étend pas jusqu'à la bordure de la partie de base (13), en particulier une ligne de séparation en forme de U.

4. Élément de liaison selon l'une au moins des revendications précédentes,
**caractérisé en ce que** la branche (17) est formée par un ruban de bordure recourbé (29) de la partie de base (13) et par le morceau surfacique (30) rabattu qui fait suite au ruban de bordure recourbé (29).

5. Élément de liaison selon la revendication 4,
**caractérisé en ce que** le ruban de bordure (29) est recourbé d'environ 90° par rapport à la barrette (15).

6. Élément de liaison selon la revendication 4 ou 5,
**caractérisé en ce que** le ruban de bordure recourbé (29) et le morceau surfacique rabattu (30) forment conjointement une surface lisse sensiblement plane.

7. Élément de liaison selon l'une au moins des revendications 4 à 6,
**caractérisé en ce que** le ruban de bordure recourbé (29) est plus court que le morceau surfacique rabattu (30).

8. Élément de liaison selon l'une au moins des revendications précédentes,
**caractérisé en ce que** la barrette (15) inclut un ruban allongé (19), de préférence central, et deux rubans transversaux (21) qui se raccordent à celui-ci du côté frontal, et les rubans transversaux (21) sont reliés aux ailes (17).

9. Élément de liaison selon l'une au moins des revendications précédentes,
**caractérisé en ce que** les ailes (17) sont cintrées.

10. Élément de liaison selon l'une au moins des revendications précédentes,
**caractérisé en ce que** la partie de base (13) est en métal, en particulier en tôle ou en matière plastique.

11. Élément de liaison selon l'une au moins des revendications précédentes,
**caractérisé en ce que** la partie de base (13), en particulier la barrette (15), comporte au moins une moulure de renforcement. (31).

12. Procédé pour fabriquer un élément de liaison (11, 11') pour relier des tringles profilées (40) et/ou des profilés de différentes formes, comprenant les étapes consistant à :
préparer une partie de base surfacique (13) ; et
former la partie de base (13) en un élément profilé avec une barrette centrale (15) et deux ailes latérales (17) en angle par rapport à la barrette (15),
**caractérisé en ce que** la partie de base (13) est entaillée le long d'une ligne de séparation (25), et **en ce que**
un morceau surfacique (30) de la partie de base (13) est rabattu hors du plan de la partie de base (13) le long de la ligne de séparation (25) en formant un espace libre de telle façon qu'il forme au moins une partie de l'une des ailes (17).

13. Procédé selon la revendication 12,
**caractérisé en ce que** lors du rabattement du morceau surfacique (30), un ruban de bordure (29) de la partie de base (13) est recourbé, en particulier d'environ 90°, dans la région de deux portions de liaison qui font suite à la ligne de séparation (25).

14. Procédé selon la revendication 12 ou 13,
**caractérisé en ce que** la branche (17) est recourbée en formant un cintrage.

15. Procédé selon l'une au moins des revendications 12 à 14,
**caractérisé en ce qu'**au moins une moulure de renforcement (31) est formée dans la partie de base (13), en particulier dans la barrette (15).
